# EUROPEAN PATENT SPECIFICATION

(11) **EP 2 049 594 B1**
(45) Date of publication and mention of the grant of the patent: **08.10.2014**
(21) Application number: 06835412.5
(22) Date of filing: 26.12.2006
(51) Int. Cl.: C08L 63/10, C08G 59/30, C04B 26/06, C04B 26/08, C08G 59/14, C08G 59/32

(54) **METHOD OF PREPARING RESIN COMPOSITION FOR ARTIFICIAL MARBLE CHIP HAVING HIGH SPECIFIC GRAVITY AND HIGH INDEX OF REFRACTION**
VERFAHREN ZUR HERSTELLUNG EINER HARZZUSAMMENSETZUNG FÜR KUNSTMARMORSPLITTER MIT HOHEM SPEZIFISCHEM GEWICHT UND HOHEM BRECHUNGSINDEX
PROCÉDÉ PERMETTANT DE PRÉPARER UNE COMPOSITION DE RÉSINE POUR ÉCLAT DE MARBRE ARTIFICIEL PRÉSENTANT UNE GRAVITÉ SPÉCIFIQUE ÉLEVÉE ET UN INDICE DE RÉFRACTION ÉLEVÉ

(30) Priority: 24.07.2006 KR 20060069237; 24.07.2006 KR 20060069193
(43) Date of publication of application: 22.04.2009
(73) Proprietor: CHEIL INDUSTRIES INC., Gumi-si, Gyeongsangbuk-do 730-710 (KR)
(72) Inventor: SON, Chang Ho, Gyeonggi-do 437-711 (KR); CHO, Sung Woo, Jeollanam-do, 555-803 (KR); PARK, Eung Seo, Jeollanam-do, 555-803 (KR)
(74) Representative: Bublak, Wolfgang
(86) International application number: PCT/KR2006/005708
(87) International publication number: WO 2008/013346

(56) References cited:
- JP-A- 09 227 189
- JP-A- 11 209 447
- JP-A- 11 236 516
- US-A1- 2003 044 618
- US-B2- 6 855 145

## Description

### Technical Field

The present invention relates to a method of preparing a resin composition for artificial marble chips having high specific gravity and high refractive index. More particularly, the present invention relates to a resin composition for artificial marble chips prepared by diluting a halogenated epoxy acrylate resin binder with a reactive monomer.

### Background Art

Generally, an artificial marble can be classified into two groups according to the base resin material: one is acrylic artificial marble, and the other is unsaturated polyester artificial marble. Recently, acrylic artificial marble has become widely used as a material for various counter tables and interior articles due to its excellent appearance, high-class texture and good weatherability as compared with unsaturated polyester artificial marble.

An acrylic artificial marble is typically produced by mixing a syrup (consisting of methyl methacrylate monomer and polymethylmethacrylate), an inorganic filler and particles (which may be referred to herein as "marble chips") that provide the artificial marble with various patterns and colors, dissolving a polymerization initiator into the mixture to form a slurry, and casting the slurry at a suitable temperature. WO 2006 06 5042 discloses the preparation of transparent marble chip.

During the preparation of the artificial marble, various artificial marble chips can be added to express various patterns and colors. Significantly, the appearance of the artificial marble having the marble chips therein may greatly affect the value of the product made therefrom.

The marble chips can be obtained by pulverizing a cured artificial marble into particles of various sizes. For the material of the marble chips, an acrylic resin; which may be the same material as the matrix of the artificial marble, has typically been used.

Recently, transparent marble chips have been used to provide an otherwise-dull artificial marble with a jewel-like appearance that gives a clear and elegant impression. In view of this development, the demand for transparent marble chips has recently been increasing.

Transparent marble chips have, until now, been prepared from polymethyl methacrylate resin or unsaturated polyester resin. However, transparent marble chips from polymethyl methacrylate resin or unsaturated polyester resin have a specific gravity of 1.15 to 1.24, which is lower than that of the matrix of the artificial marble. Due to the relatively low specific gravity, such transparent marble chips float on the upper surface of the matrix and, as a result, there are no transparent marble chips on the opposite, i.e., lower, surface of the artificial marble, and the artificial marble product does not exhibit uniform dispersion of the transparent marble chips therein. If distribution of the transparent marble chips through the matrix to the opposite surface of the artificial marble is to be achieved using the relatively low specific gravity transparent marble chips, it may require addition of more than twice the amount of transparent marble chips than would otherwise be used. This may make it difficult to control the thickness of the resulting artificial marble.

In order to increase the specific gravity of marble chips up to that of matrix, inorganic fillers such as aluminum trihydrate, barium sulfate, silica, etc., may be added to the formulation used to prepare the marble chips. However, the addition of such inorganic fillers may cause problems. For example, the transparency of the marble chips may be significantly reduced.

Engineered stone ("e-stone")-type artificial marbles, which employ natural silica such as quartz, silica sand, silica crystals, etc., or glassy silica such as glass, molten glass, etc., may have transparent chips. However, these e-stone-type artificial marbles have some disadvantages. For example, it may be unduly difficult to manufacture such e-stones using conventional continuous production methods because the transparent chips tend to sink down and sanding properties of the transparent chips are not good.

In this regard, the Morse hardness of the acryl resin being used as a matrix material for the e-stone is different from that of the material, i.e., silica or silica compound, that forms the transparent chips. As a result, the e-stone-type artificial marble does not provide good evenness and levelness.

In view of the above, it will be appreciated that transparent chips used for artificial marble should have the same specific gravity as the matrix so as not to sink down into the matrix and to provide uniform dispersion of transparent chips throughout the artificial marble, regardless of the curing time, should have an abrasive property that is the same as the matrix so that the artificial marble exhibits good evenness and levelness, and should have a high refractive index. Further, a method for preparing transparent marble chips having high refractive index that can provide jewel like appearance capable of use in a high-class product is required.

As a method for overcoming the above-described problems, a method of increasing the specific gravity of the transparent chips has been proposed that includes halogenating an unsaturated polyester resin. However, in such a method the carbon-carbon double bonds of the unsaturated polyester resin are randomly distributed, which makes it difficult to adjust the number of double bonds in the resin. As a result, shrinkage upon curing of the unsaturated polyester resin is increased where double bonds are crowded, which results in cracking. In order to suppress such shrinkage at the time of curing, a method of blending linear polymer with the binder is commonly employed. However, the blending-in of a linear polymer has a serious disadvantage in that the transparent chips become opaque white, thereby reducing the transparency of the transparent chips. Another method of preventing shrinkage has been proposed that decreases the number of the double bonds in the binder resin. However, in such a method the hardness of the resulting cured article is too low to use for producing marble chips.

Accordingly, the present inventors have developed a resin composition for marble chips that have a high specific gravity, high refractive index and high transparency, as well as having similar sanding properties and hardness to the matrix of the artificial marble, and having good compatibility with the matrix, by using a resin composition of halogenated epoxy acrylate and reactive monomer.

### Disclosure of Invention

### Technical Problem

An object of the present invention is to provide a method of preparing a resin composition for marble chips that have a specific gravity.

Another object of the present invention is to provide a method of preparing a resin composition for marble chips that can provide an artificial marble with a uniform pattern, regardless of curing time or molding time.

Another object of the present invention is to provide a method of preparing a resin composition for marble chips that have a high transparency and a high refractive index.

Another object of the present invention is to provide a method of preparing a resin composition for marble chips that exhibit a similar sanding property and Morse hardness to the matrix used to form the artificial marble.

Another object of the present invention is to provide a method of preparing a resin composition for marble chips that have a good compatibility with the matrix used to form the artificial marble.

Another object of the present invention is to provide a method of preparing a resin composition for marble chips that have a good chemical resistance.

Another object of the present invention is to provide a method of preparing a resin composition for marble chip that have a good thermal processability.

Another object of the present invention is to provide a method of preparing a resin composition for marble chips that have a good levelness.

Another object of the present invention is to provide a method of preparing a resin composition for marble chips that have a good dispersion on the surface of the artificial marble.

Other objects and advantages of this invention will be apparent from the ensuing disclosure and appended claims.

### Technical Solution

One aspect of the invention provides a method for preparing a resin composition for marble chips. The method comprises reacting a halogenated epoxy resin with a (meth)acrylic acid to prepare a halogenated epoxy acrylate resin binder; and diluting the halogenated epoxy acrylate resin binder by adding a reactive monomer to the halogenated epoxy acrylate resin binder.

In some embodiments, the halogenated epoxy resin may be a bisphenol A-type or a phenol-formaldehyde novolak-type resin, and may have an epoxy equivalent ranging from about 250 to about 950.

In some embodiments, the halogenated epoxy acrylate resin binder may be prepared by dropping a mixed solution of the (meth)acrylic acid and a reaction catalyst into the halogenated epoxy resin in an equivalent ratio of halogenated epoxy resin/ (meth)acrylic acid that ranges from about 1 to about 1.2.

In some embodiments, the reaction catalyst may be mixed with the (meth)acrylic acid in an amount that ranges from about 1.5 % to about 4.0 % by weight of the (meth)acrylic acid.

In some embodiments, the reaction catalyst may be selected from the group consisting of triethylamine, ethyltriphenylammonium bromide, dimethylbenzylamine, din-butylamine, tetramethylammonium chloride, chromium acetyl acetate, triphenylstibine, dimethylphenylbenzylammonium chloride, triphenylphosphine, ethylmethyl imidazole, dimethyl imidazole, and mixtures thereof.

In some embodiments, the halogenated epoxy acrylate resin binder may be diluted by adding about 5 to about 40 parts by weight of the reactive monomer to about 60 to about 95 parts by weight of the halogenated epoxy acrylate resin binder.

In some embodiments, before dropping the mixed solution, the halogenated epoxy resin may be melted, and about 0.001 to about 0.04 parts by weight of polymerization inhibitor and about 0.005 to about 0.02 parts by weight of color modifier may be added to the melted halogenated epoxy resin. The dropping of the mixed solution may be initiated in 1 minute.

In some embodiments, after dropping, the reaction temperature may be elevated to a temperature in a range of about 105 °C to about 125 °C, followed by an isothermal reaction.

In some embodiments, after diluting the halogenated epoxy acrylate resin binder, the reaction temperature may be cooled to about 60 °C or below.

In some embodiments, before adding the reactive monomer, a polymerization inhibitor may be added to the halogenated epoxy acrylate resin binder in an amount that ranges from about 0.001 to about 0.04 parts by weight.

In some embodiments, the polymerization inhibitor may be selected from the group consisting of hydroquinone, toluhydroquinone, hydroquinone monomethylether, parabenzoquinone, dimethylparabenzoquinone, *p*-*tert*-butylcatechol, and mixtures thereof.

In some embodiments, the halogenated epoxy acrylate resin binder may further comprise a metallic soap salt as a cure controlling agent.

### Best Mode for Carrying Out the Invention

The method of preparing a resin composition for marble chip comprises reacting a halogenated epoxy resin with a (meth)acrylic acid to prepare a halogenated epoxy acrylate resin binder; and diluting the halogenated epoxy acrylate resin binder by adding a reactive monomer.

In the present invention, a halogenated epoxy acrylate resin can be employed as the binder. As a method for obtaining high specific gravity and transparent marble chips, a method using a halogenated unsaturated polyester has been previously used. However, such an halogenated unsaturated polyester exhibit problems, e.g., cracks can occur inside the resulting marble chips. In the present invention, a halogenated epoxy acrylate is employed as a resin composition for the marble chips. Accordingly, the marble chips may be formed having a high specific gravity and a high transparency.

### (A) Preparation of halogenated epoxy acrylate resin binder

### Step (a₁): Melting of Halogenated Epoxy Resin

A halogenated epoxy resin, e.g., a bisphenol A-type or phenol-formaldehyde n ovolak-type resin having an epoxy equivalent ranging from about 250 to about 950, is fed into a reactor equipped with a stirrer, a thermometer, a packed condenser, and a dropping funnel in an amount ranging from about 50 to about 80 parts by weight. Then, the temperature of the reactor is increased to melt the halogenated epoxy resin, while introducing nitrogen gas or air therein as a cover gas. When the melting of the halogenated epoxy resin is observed, the contents of the reactor are then heated to about 85 °C to about 95 °C.

### Step (a): Adding Polymerization Inhibitor and Color Modifier

After the halogenated epoxy resin is completely melted to the extent that stirring is smooth, the feeding of nitrogen gas or air cover gas is stopped. A polymerization inhibitor and a color modifier may be added into the reactor. The amount of the polymerization inhibitor may range from about 0.001 to about 0.04 parts by weight, and the amount of the color modifier may range from about 0.005 to about 0.02 parts by weight. After the addition of the polymerization inhibitor and the color modifier, the contents of the reactor may be stirred while again feeding the nitrogen gas or air cover gas therein.

The polymerization inhibitor can be selected from the group consisting of hydroquinone, toluhydroquinone, hydroquinone monomethylether, parabenzoquinone, dimethylparabenzoquinone and *p-tert*-butylcatechol, and mixtures thereof.

For the color modifier, phosphorous acid or a phosphorus compound can be used.

Such phosphorus compounds may include, for instance, Naphthobin KX-405, which is commercially available from Metyl Gesellschaft AG. Antioxidants commercially available from CIBA-Geigy under the name of IGANOX- 1010 and 1076 can also be used.

### Step (a₃): Dropping Reaction

After the addition of the polymerization inhibitor and the color modifier, a mixed solution of (meth)acrylic acid and a reaction catalyst is added dropwise into the reactor by means of a dropping funnel in an equivalent ratio of halogenated epoxy resin/ (meth)acrylic acid that ranges from about 1 to about 1.2. By dropping the mixed solution into the halogenated epoxy resin, the terminal glycidyl group of the halogenated epoxy resin is subjected to a ring-opening reaction.

The dropping should be initiated in about 1 minute. The amount of reaction catalyst preferably ranges from about 1.5 to about 4.0 % by weight. The dropping is conducted over a period of from about 1 to about 4 hours, maintaining the temperature of the reactor at a temperature that ranges from about 85 °C to about 100 °C.

Examples of the reaction catalyst include triethylamine, ethyltrimethyl ammonium bromide, dimethylbenzylamine, di-n-butylamine, dimethylphenylbenzylamine, tetramethylammonium chloride, chromium acetyl acetate, triphenylstibine, dimethylphenylbenzylammonium chloride, triphenyl phosphine, ethylmethyl imidazole, dimethyl imidazole, and mixtures thereof.

### Step (a₄): Isothermal Reaction

After dropping reaction, the content of the reactor is heated to a temperature ranging from about 105 °C to about 125 °C. Then the temperature is maintained to obtain a halogenated epoxy acrylate resin binder having a number average molecular weight that ranges from about 1,000 to about 4,000 and having an acid value of less than about 15, preferably in a range of about 7 to about 15. If the acid value is more than about 15, it may not be possible to produce marble chips, due to gelation when reacting with the reactive monomer.

### (B) Addition of Reactive Monomer

The halogenated epoxy acrylate resin binder (A) prepared from the above is cooled to a temperature ranging from about 105 °C to about 100 °C. The feeding of nitrogen gas or air cover gas is then stopped. The polymerization inhibitor of the above-described step (a₂) is further added in an amount ranging from about 0.001 to about 0.04 parts by weight, followed by cooling to a temperature ranging from about 95 °C to about 90 °C. Then, the halogenated epoxy acrylate resin binder is diluted by adding about 5 to about 40 parts by weight of the reactive monomer to the binder.

In some embodiments, the amount of the halogenated epoxy acrylate resin binder (A) ranges from about 60 to about 95 parts by weight, and the amount of the reactive monomer ranges from about 5 to about 40 parts by weight. Preferably, the amount of the halogenated epoxy acrylate resin binder ranges from about 65 to about 90 parts by weight, and the amount of the reactive monomer ranges from about 10 to about 35 parts by weight. More preferably, the amount of the halogenated epoxy acrylate resin binder ranges from about 70 to about 90 parts by weight, and the amount of the reactive monomer ranges from about 10 to about 30 parts by weight.

If the amount of the binder is less than about 60 parts by weight, the marble chips obtained therefrom may not have high specific gravity. On the other hand, if the amount of the binder is more than about 95 parts by weight, the viscosity of the resin composition becomes high, which may make the process difficult to control.

In some embodiments, the binder further comprises a halogenated urethane acrylate.

The reactive monomer is selected from the group consisting of methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth)acrylate, chlorophenyl (meth)acrylate, methoxyphenyl (meth)acrylate, bromophenyl (meth)acrylate, ethylene glycol di(meth)acrylate, 1,2-propylene glycol (meth)acrylate, 1,3-butanediol di(meth)acrylate, 1,3-propylene glycol (meth)acrylate, 1,4-butanediol di(meth)acrylate, 1,5-pentanediol di(meth)acrylate, neopentyl glycol di(meth)acrylate, diethylene glycol di(meth)acrylate, triethylene glycol di(meth)acrylate, dipropylene glycol di(meth)acrylate, diallyl terephthalate, diallyl phthalate, diallyl carbonate, trimethylolpropane tri(meth)acrylate, pentaerythritol tri(meth)acrylate, pentaerythritol tetra(meth)acrylate, dipentaerythritol hexa(meth)acrylate, ethoxy ethoxyethyl acrylate, glycidyl methacrylate, 1,6-hexanediol di(meth)acrylate, glycerol tri(meth)acrylate, methylpropanediol di(meth)acrylate, polyethylene glycol di(meth)acrylate, styrene, halogenated styrene, vinyl toluene, divinyl benzene, α- methyl styrene, α-methyl styrene dimer and mixtures thereof.

The resin composition for marble chip is cured by cooling to about 60 °C or below. In this step, a cure controlling agent may be used to control the curing. For the cure controlling agent, a metallic soap salt can be used, but the cure controlling agent is not limited thereto. The amount of the cure controlling agent used may range from about 0.00005 to about 0.0002 parts by weight. Examples of the metallic soap salt include soap salts of copper, cobalt, potassium, calcium, zirconium, and zinc. The metallic soap salt may be used alone or in combination of two.

The resin composition of the present invention may further comprise an additive selected from the group consisting of a defoaming agent, a coupling agent, a pigment, a dye, an ultraviolet light absorbing agent, a light diffusing agent, a polymerization inhibitor, a cure controlling agent, an antistatic agent, a flame retardant, a heat stabilizer, etc., and mixtures thereof.

The invention may be better understood by reference to the following examples, which are intended for the purpose of illustration and are not to be construed as in any way limiting the scope of the present invention, which is defined in the claims appended hereto. In the following examples, all parts and percentages are by weight, unless otherwise indicated.

### Mode for the Invention

### Examples

### Example 1

28.4 parts by weight of a brominated bisphenol A-type epoxy resin (Dow Chemical Co., D.E.R. 542) and 39.5 parts by weight of another brominated bisphenol A-type epoxy resin (Dow Chemical Co., D.E.R. 560) were fed into a reactor, which was equipped with a stirrer, a thermometer, a packed condenser and a dropping funnel, and heated to a reaction temperature of 85 °C to 95 °C while introducing nitrogen gas as a cover gas therein. 0.01 parts by weight of a color modifier (Naphthobin KX-405), 0.003 parts by weight of hydroquinone monomethylether and 0.009 parts by weight of toluhydroquinone as polymerization inhibitors were added. A mixed solution of 15.2 parts by weight of acrylic acid and 0.3 parts by weight of dimethylbenzylamine in the dropping funnel was added dropwise into the reactor in 1 minute. Then, the temperature of reactor contents was increased to 110 °C from heat of the resulting exothermic reaction to obtain a brominated epoxy acrylate resin binder having a number average molecular weight of 2,900 and an acid value of less than 15.

The brominated epoxy acrylate resin binder thus obtained was cooled to 105 °C. The feeding of nitrogen gas was stopped. 0.004 parts by weight of hydroquinone monomethylether were added, followed by cooling to a temperature of 90 °C. The brominated epoxy acrylate resin binder was diluted with a solution that included 4.2 parts by weight of styrene monomer, 13.8 parts by weight of methylmethacrylate and 0.00007 parts by weight of copper naphthenate, followed by quenching below 60 °C to obtain a resin.

### Example 2

Example 2 was conducted in the same manner as in Example 1, except that 67.8 parts by weight of a brominated bisphenol A-type epoxy resin (Bakelite 523, commercially available from HEXION), 0.01 parts by weight of Naphthobin KX-405, 0.005 parts by weight of hydroquinone monomethylether, 0.006 parts by weight of toluhydroquinone, 14.2 parts by weight of acrylic acid, and 0.32 parts by weight of dimethylbenzylamine were employed for preparing the binder.

The brominated epoxy acrylate resin binder was cooled to a temperature of 100 °C. The feeding of nitrogen gas cover gas was stopped and 0.004 parts by weight of hydroquinone monomethylether was added, followed by cooling to a temperature of 95 °C. The brominated epoxy acrylate resin binder was diluted by adding 19.8 parts by weight of methylmethacrylate, followed by quenching below a temperature of 60 °C to obtain a resin.

### Example 3

Example 3 was conducted in the same manner as in Example 1, except that 65.9 parts by weight of a brominated bisphenol A-type epoxy resin (Kukdo Chem. Co. of Korea, YDB-400), 0.01 parts by weight of Naphthobin KX-405,0.006 parts by weight of hydroquinone monomethylether, 0.009 parts by weight of toluhydroquinone, 15.9 parts by weight of methacrylic acid, and 0.32 parts by weight of dimethylbenzylamine were used for preparing the binder.

The brominated epoxy acrylate resin binder was cooled to a temperature of 105 °C. The feeding of nitrogen gas cover gas was stopped and 0.004 parts by weight of hydroquinone monomethylether were added, followed by cooling to 95 °C. The brominated epoxy acrylate resin binder was diluted with a solution of 1.2 parts by weight of styrene monomer and 18.3 parts by weight of methylmethacrylate, followed by quenching below 60 °C to obtain a resin.

### Comparative Example 1

Comparative Example 1 was conducted in the same manner as in Example 1, except that 18.9 parts by weight of a non-halogenated bisphenol A-type epoxy resin (Kukdo Chem. Co. of Korea, YD-128), 43.3 parts by weight of a bisphenol A-type epoxy resin (Kukdo Chem. Co. of Korea, YD-012) and 18.2 parts by weight of acrylic acid were used for preparing the epoxy acrylate resin binder.

The epoxy acrylate resin binder was cooled to 105 °C. The feeding of nitrogen gas or air was stopped. 0.004 parts by weight of *p-tert*-butyl catechol was added, followed by cooling to 95 °C. To the epoxy acrylate resin binder, 19.2 parts by weight of styrene monomer and 0.00007 parts by weight of copper naphthenate were added, followed by quenching below 60 °C to obtain a resin.

### Comparative Example 2

13.9 parts by weight of isophthalic acid, 16.6 parts by weight of phthalic anhydride, 17.1 parts by weight of maleic anhydride, 19.5 parts by weight of propylene glycol, and 22.3 parts by weight of neopentyl glycol were added into a reactor equipped with a stirrer, a thermometer, a nitrogen inlet duct, a packed condenser, and a condenser, while introducing a nitrogen gas cover gas therein. The reaction temperature was increased to a temperature ranging from 160 °C to 170 °C from heat of the resulting exothermic reaction, and further heated to a temperature ranging from 170 °C to 180 °C while draining condensed water from the reactor. When the temperature reached 210 °C, the temperature was maintained to obtain an unsaturated polyester resin binder having a number average molecular weight of 4,300, an acid value under 25, and a viscosity in styrene of 100 poise.

The unsaturated polyester resin binder thus obtained was cooled to a temperature of 190 °C and 0.009 parts by weight of toluhydroquinone as a polymerization inhibitor were added, followed by cooling to a temperature of 160 °C. The unsaturated polyester resin binder was diluted with a solution of 19.2 parts by weight of styrene monomer, 0.001 parts by weight of *p-tert*-butyl catechol and 0.00007 parts by weight of copper naphthenate, followed by quenching to a temperature below 60 °C to obtain a resin.

The physical properties of the resins of Examples 1-3 and Comparative Examples 1-2 are shown in Table 1 below:

**Table 1**

| | Examples | | | Comparative Examples | |
|---|---|---|---|---|---|
| | 1 | 2 | 3 | 1 | 2 |
| Tensile Modulus(kg/cm²) | 34390 | 33780 | 36430 | 38780 | 27440 |
| Flexural Strength(kg/cm²) | 1289 | 1338 | 1217 | 1213 | 948.5 |
| Flexural Modulus(kg/cm²) | 35760 | 36130 | 35430 | 36220 | 28970 |
| Refractive Index | 1.574 | 1.573 | 1.575 | 1.543 | 1.542 |
| Elongation (%) | 1.15 | 1.21 | 1.19 | 1.22 | 3.57 |
| Specific Gravity (Liquid)/25 °C | 1.583 | 1.582 | 1.591 | 1.246 | 1.257 |

The physical properties were measured as follows:
(1) Tensile modulus and flexural modulus were measured in accordance with ISO R3268.
(2) Flexural strength was measured in accordance with ISO R3286.
(3) Elongation was measured in accordance with ISO R257.
(4) Specific gravity was measured using a specific gravity bottle at 25 °C.
(5) Refractive index was measured using an ABBE refractometer (3T) at 25 °C.

As shown in Table 1, the resins of the Comparative Examples showed poor flexural strength as compared with resins of the Examples. The flexural modulus of Comparative Example 2 was also reduced. Significantly, the specific gravities of the Comparative Examples were remarkably lowered.

The resins obtained from Examples 1 through 3 and Comparative Examples 1 through 2 were pulverized to particle size ranging from 0.1 mm to 5 mm respectively to prepare marble chips. 100 parts by weight of marble chips, 100 parts by weight of a syrup consisting of polymethylmethacrylate and methylmethacrylate, and 150 parts by weight of aluminum trihydrate were mixed and cured to form an artificial marble.

The artificial marble obtained therefrom was evaluated by the method described below, and the physical properties of the artificial marble were evaluated. The results of the evaluation are shown in Table 2.

**Table 2**

| Examples | Examples | | | Comparative Examples | |
|---|---|---|---|---|---|
| | 1 | 2 | 3 | 1 | 2 |
| Sanding Property | Good | Good | Good | Cracked | Cracked |
| Thermal processability (mm) | 150R | 150R | 150R | 300R | 300R |
| Dispersion of chips on the surface of the artificial marble | Good | Good | Good | Poor | Poor |
| Chemical resistance | Good | Good | Good | Good | Poor |
| Levelness | Good | Good | Good | Good | Poor |

(1) Sanding Property: After sanding the surface of the artificial marble with a sandpaper, the appearance of marble chip was evaluated visually.
(2) Thermal Processability: artificial marble was subjected to heating at a temperature of 180 °C for 20 minutes, followed by curve cutting. Thermal processability was evaluated by measuring a minimum radius where a crack or protrusion of a marble chip did not occur.
(3) Chemical Resistance: The surfaces of the marble chips were evaluated after dipping into 1.0 N of hydrochloric acid and 1.0 N of aqueous ammonia solution at 25 °C for 48 hours.
(4) Surface Levelness: After sanding the surface of the artificial marble, the levelness of the interface between the marble chips and the matrix was evaluated visually.

The marble chips obtained from Comparative Examples 1 and 2 had low specific gravity, and the dispersion of the marble chips on the surface of the artificial marble was poor. The thermal processabilities of the artificial marbles using the marble chips of Comparative Examples 1 and 2 respectively were also reduced. On the other hand, the marble chips obtained from Examples 1 through 3 had a high specific gravity, sufficient to prevent the marble chips from floating, and a high refractive index. Further, Examples 1 through 3 showed good thermal processability at a radius of 150 mm, uniform dispersion of the marble chips, good chemical resistance, and good surface levelness.

The present invention may be easily carried out by a person of ordinary skill in the art. Any modifications and changes may be deemed to be within the scope of the present invention as defined in the following claims.

## Claims

1. A method for preparing a resin composition for marble chip, comprising:
reacting a halogenated epoxy resin with a (meth)acrylic acid to prepare a halogenated epoxy acrylate resin binder; and
diluting the halogenated epoxy acrylate resin binder by adding a reactive monomer to the halogenated epoxy acrylate resin binder.

2. The method of Claim 1, wherein said halogenated epoxy resin is a bisphenol A- type or a phenol-formaldehyde novolak-type resin and has an epoxy equivalent ranging from about 250 to about 950.

3. The method of Claim 1, wherein said halogenated epoxy acrylate resin binder is prepared by dropping a mixed solution of the (meth)acrylic acid and a reaction catalyst into the halogenated epoxy resin to make a equivalent ratio of halogenated epoxy resin/(meth) acrylic acid ranging from about 1 to about 1.2.

4. The method of Claim 3, wherein said reaction catalyst is mixed with the (meth)acrylic acid in an amount of about 1.5 to about 4.0 % by weight.

5. The method of Claim 3, wherein said reaction catalyst is selected from the group consisting of triethylamine, ethyltriphenylammonium bromide, dimethylbenzylamine, di-n-butylamine, tetramethylammonium chloride, chromium acetyl acetate, triphenylstibine, dimethylphenylbenzylammonium chloride, triphenylphosphine, ethylmethyl imidazole, dimethyl imidazole, and mixtures thereof.

6. The method of Claim 1, wherein said reactive monomer is selected from the group consisting of methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth) acrylate, chlorophenyl (meth) acrylate, methoxyphenyl (meth)acrylate, bromophenyl (meth)acrylate, ethylene glycol di(meth)acrylate, 1,2-propylene glycol (meth)acrylate, 1,3-butanediol di(meth)acrylate, 1,3-propylene glycol (meth)acrylate, 1,4-butanediol di(meth)acrylate, 1,5-pentanediol di(meth)acrylate, neopentyl glycol di(meth)acrylate, diethylene glycol di(meth)acrylate, Methylene glycol di(meth)acrylate, dipropylene glycol di(meth)acrylate, diallylterephthalate, diallylphthalate, diallyl carbonate, trimethylolpropane tri(meth)acrylate, pentaerythritol tri(meth)acrylate, pentaerythritol tetra(meth)acrylate, dipentaerythritol hexa(meth)acrylate, ethoxy ethoxy ethyl acrylate, glycidyl methacrylate, 1,6-hexanediol di(meth)acrylate, glycerol tri(meth)acrylate, methylpropanediol di(meth)acrylate, polyethylene glycol di(meth)acrylate, styrene, halogenated styrene, vinyl toluene, divinyl benzene, α- methyl styrene, α-methyl styrene dimer, and mixtures thereof.

7. The method of Claim 1, wherein said halogenated epoxy acrylate resin binder is diluted by adding about 5 to about 40 parts by weight of the reactive monomer to about 60 to about 95 parts by weight of the halogenated epoxy acrylate resin binder.

8. The method of Claim 3, further comprising, before dropping: melting the halogenated epoxy resin, and adding about 0.001 to about 0.04 parts by weight of polymerization inhibitor and about 0.005~0.02 parts by weight of color modifier to the melted halogenated epoxy resin, and wherein said dropping is initiated in 1 minute.

9. The method of Claim 3, further comprising: after dropping, elevating the reaction temperature to a temperature ranging from about 105 °C to about 125 °C, followed by an isothermal reaction.

10. The method of Claim 1, further comprising, after diluting the halogenated epoxy acrylate resin binder: cooling the reaction to a temperature of about 60 °C or below.

11. The method of Claim 10, further comprising, before adding the reactive monomer: adding a polymerization inhibitor in an amount ranging from about 0.001 to about 0.04 parts by weight to the halogenated epoxy acrylate resin binder.

12. The method of Claim 10, wherein said halogenated epoxy acrylate resin binder further comprises a metallic soap salt as a cure controlling agent.

13. The method as in either claim 8 or claim 11, wherein said polymerization inhibitor is selected from the group consisting of hydroquinone, toluhy- droquinone, hydroquinone monomethylether, parabenzoquinone, dimethyl- parabenzoquinone, p-*tert*-butyl catechol, and mixtures thereof.

14. The method of Claim 1, wherein said binder further comprises a halogenated urethane acrylate resin.

15. The method of Claim 1, wherein said halogenated epoxy acrylate resin binder has an acid value of about 1 to about 15.

16. The method of Claim 1, wherein said resin composition further comprises an additive selected from the group consisting of a defoaming agent, a coupling agent, a pigment, a dye, an ultraviolet light absorbing agent, a light diffusing agent, a polymerization inhibitor, a cure controlling agent, an antistatic agent, a flame-retardant, a heat stabilizer, and mixtures thereof.

## Patentansprüche

1. Verfahren zur Herstellung einer Harzzusammensetzung für Marmorsplitt bzw. - stückchen, umfassend:
Umsetzen eines halogenierten Epoxyharzes mit einer (Meth)acrylsäure zur Herstellung eines halogenierten Epoxyacrylatharzbindemittels; und
Verdünnen des halogenierten Epoxyacrylatharzbindemittels durch Zugabe eines reaktiven Monomers zu dem halogenierten Epoxyacrylatharzbindemittel.

2. Verfahren nach Anspruch 1, wobei es sich bei dem halogenierten Epoxyharz um ein Harz vom Bisphenol-A-Typ oder vom Phenol-Formaldehyd-Novolak-Typ handelt und es ein Epoxyäquivalent im Bereich von etwa 250 bis etwa 950 aufweist.

3. Verfahren nach Anspruch 1, wobei das halogenierte Epoxyacrylatharzbindemittel durch Eintropfen einer Mischlösung aus der (Meth)acrylsäure und eines Reaktionskatalysators in das halogenierte Epoxyharz hergestellt wird, um ein Äquivalenzverhältnis von halogeniertem Epoxyharz / (Meth)acrylsäure im Bereich von etwa 1 zu etwa 1,2 zu erhalten.

4. Verfahren nach Anspruch 3, wobei der Reaktionskatalysator mit der (Meth)acrylsäure in einer Menge von etwa 1,5 bis etwa 4,0 Gew.-% vermischt wird.

5. Verfahren nach Anspruch 3, wobei der Reaktionskatalysator ausgewählt ist aus der Gruppe, bestehend aus Triethylamin, Ethyltriphenylammoniumbromid, Dimethylbenzylamin, Di-n-butylamin, Tetramethylammoniumchlorid, Chromacetylacetat, Triphenylstibin, Dimethylphenylbenzylammoniumchlorid, Triphenylphosphin, Ethylmethylimidazol, Dimethylimidazol und Gemischen davon.

6. Verfahren nach Anspruch 1, wobei das reaktive Monomer ausgewählt ist aus der Gruppe, bestehend aus Methyl(meth)acrylat, Ethyl(meth)acrylat, 2-Ethylhexyl(meth)acrylat, Octyl(meth)acrylat, Dodecyl(meth)acrylat, Octadecyl(meth)acrylat, Methylcyclohexyl(meth)acrylat, Isobornyl(meth)acrylat, Phenyl(meth)acrylat, Benzyl(meth)acrylat, Chlorphenyl(meth)acrylat, Methoxyphenyl(meth)acrylat, Bromphenyl(meth)acrylat, Ethylenglycoldi(meth)acrylat, 1,2-Propylenglycol(meth)acrylat, 1,3-Butandioldi(meth)acrylat, 1,3-Propylen-glycol(meth)acrylat, 1,4-Butandioldi(meth)acrylat, 1,5-Pentandioldi(meth)acrylat, Neopentylglycoldi(meth)acrylat, Diethylenglycoldi(meth)acrylat, Methylen-glycoldi(meth)acrylat, Dipropylenglycoldi(meth)acrylat, Diallylterephthalat, Diallylphthalat, Diallylcarbonat, Trimethylolpropantri(meth)acrylat, Pentaerythritol-tri(meth)acrylat, Pentaerythritoltetra(meth)acrylat, Dipentaerythritolhexa(meth)acrylat, Ethoxyethoxyethylacrylat, Glycidylmethacrylat, 1,6-Hexandioldi(meth)acrylat, Glycerintri(meth)acrylat, Methylpropandioldi(meth)acrylat, Polyethylenglycol-di(meth)acrylat, Styrol, halogeniertem Styrol, Vinyltoluol, Divinylbenzol, α-Methylstyrol, α-Methylstyroldimer, und Gemischen davon.

7. Verfahren nach Anspruch 1, wobei das halogenierte Epoxyacrylatharzbindemittel durch Zugabe von etwa 5 bis etwa 40 Gewichtsteilen des reaktiven Monomers zu etwa 60 bis etwa 95 Gewichtsteilen des halogenierten Epoxyacrylatharzbindemittels verdünnt wird.

8. Verfahren nach Anspruch 3, des Weiteren umfassend vor dem Eintropfen: Schmelzen des halogenierten Epoxyharzes und Zugabe von etwa 0,001 bis etwa 0,04 Gewichtsteilen eines Polymerisationsinhibitors und etwa 0,005~0,02 Gewichtsteilen eines Farbmodifikators zu dem geschmolzenen halogenierten Epoxyharz, und wobei das Eintropfen in 1 Minute eingeleitet wird.

9. Verfahren nach Anspruch 3, des Weiteren umfassend: nach dem Eintropfen Erhöhen der Reaktionstemperatur auf eine Temperatur im Bereich von etwa 105°C bis etwa 125°C, gefolgt von einer isothermen Reaktion.

10. Verfahren nach Anspruch 1, des Weiteren umfassend nach dem Verdünnen des halogenierten Epoxyacrylatharzbindemittels: Abkühlen der Reaktion auf eine Temperatur von etwa 60°C oder darunter.

11. Verfahren nach Anspruch 10, des Weiteren umfassend vor der Zugabe des reaktiven Monomers: Zugabe eines Polymerisationsinhibitors in einer Menge im Bereich von etwa 0,001 bis etwa 0,04 Gewichtsteilen zu dem halogenierten Epoxyacrylatharzbindemittel.

12. Verfahren nach Anspruch 10, wobei das halogenierte Epoxyacrylatharzbindemittel des Weiteren ein Metallseifensalz als Aushärtungsregelungsmittel umfasst.

13. Verfahren entweder nach Anspruch 8 oder Anspruch 11, wobei der Polymerisationsinhibitor ausgewählt ist aus der Gruppe, bestehend aus Hydrochinon, Toluhydrochinon, Hydrochinonmonomethylether, Parabenzochinon, Dimethylparabenzochinon, p-*tert*-Butylcatechol, und Gemischen davon.

14. Verfahren nach Anspruch 1, wobei das Bindemittel des Weiteren ein halogeniertes Urethanacrylatharz umfasst.

15. Verfahren nach Anspruch 1, wobei das halogenierte Epoxyacrylatharzbindemittel einen Säurewert von etwa 1 bis etwa 15 aufweist.

16. Verfahren nach Anspruch 1, wobei die Harzzusammensetzung des Weiteren ein Additiv umfasst, das ausgewählt ist aus der Gruppe, bestehend aus einem Entschäumungsmittel, einem Kupplungsmittel, einem Pigment, einem Farbstoff, einem Ultraviolett-Licht absorbierenden Mittel, einem Lichtstreuungsmittel, einem Polymerisationsinhibitor, einem Aushärtungsregelungsmittel, einem Antistatikmittel, einem Flammhemmer, einem Wärmestabilisator, und Gemischen davon.

## Revendications

1. Procédé de préparation d'une composition de résine pour éclats de marbre, comprenant les étapes suivantes :
- faire réagir une résine époxy halogénée avec de l'acide acrylique ou méthacrylique, pour préparer un liant résineux de type acrylate de résine époxy halogénée ;
- et diluer ce liant résineux de type acrylate de résine époxy halogénée en ajoutant un monomère réactif au liant résineux de type acrylate de résine époxy halogénée.

2. Procédé conforme à la revendication 1, dans lequel ladite résine époxy halogénée est une résine de type bisphénol A ou une résine phénol-formaldéhyde de type novolaque et présente un équivalent époxyde valant d'environ 250 à environ 950.

3. Procédé conforme à la revendication 1, dans lequel on prépare ledit liant résineux de type acrylate de résine époxy halogénée en ajoutant goutte à goutte à la résine époxy halogénée une solution mixte d'acide acrylique ou méthacrylique et d'un catalyseur de réaction, jusqu'à obtenir pour le rapport d'équivalents de la résine époxy halogénée à l'acide acrylique ou méthacrylique une valeur située dans l'intervalle allant d'environ 1 à environ 1,2.

4. Procédé conforme à la revendication 3, dans lequel ledit catalyseur de réaction est mélangé avec l'acide acrylique ou méthacrylique en une proportion d'environ 1,5 à environ 4 % en poids.

5. Procédé conforme à la revendication 3, pour lequel ledit catalyseur de réaction est choisi dans l'ensemble formé par les composés suivants : triéthyl-amine, bromure d'éthyl-triphényl-ammonium, diméthyl-benzyl-amine, di-n-butyl-amine, chlorure de tétraméthyl-ammonium, acétyl-acétate de chrome, triphényl-stibine, chlorure de diméthyl-phényl-benzyl-ammonium, triphényl-phosphine, éthyl-méthyl-imidazole, et diméthyl-imidazole, ainsi que leurs mélanges.

6. Procédé conforme à la revendication 1, pour lequel ledit monomère réactif est choisi dans l'ensemble constitué par les suivants : (méth)acrylate de méthyle, (méth)acrylate d'éthyle, (méth)acrylate de 2-éthyl-hexyle, (méth)acrylate d'octyle, (méth)acrylate de dodécyle, (méth)acrylate d'octadécyle, (méth)acrylate de méthyl-cyclohexyle, (méth)acrylate d'isobornyle, (méth)acrylate de phényle, (méth)acrylate de benzyle, (méth)acrylate de chloro-phényle, (méth)acrylate de méthoxy-phényle, (méth)acrylate de bromo-phényle, di(méth)acrylate d'éthylène-glycol, (méth)acrylate de 1,2-propylène-glycol, di(méth)-acrylate de butane-1,3-diol, (méth)acrylate de 1,3-propylène-glycol, di(méth)acrylate de butane-1,4-diol, di(méth)acrylate de pentane-1,5-diol, di(méth)acrylate de néopentyl-glycol, di(méth)acrylate de diéthy-lène-glycol, di(méth)acrylate de triéthylène-glycol, di(méth)acrylate de dipropylène-glycol, téréphtalate de diallyle, phtalate de diallyle, carbonate de diallyle, tri(méth)acrylate de triméthylol-propane, tri(méth)-acrylate de pentaérythritol, tétra(méth)acrylate de pentaérythritol, hexa-(méth)acrylate de dipentaérythritol, acrylate d'éthoxy-éthoxy-éthyle, méthacrylate de glycidyl, di(méth)acrylate d'hexane-1,6-diol, tri(méth)acrylate de glycérol, di(méth)acrylate de méthyl-propane-diol, di(méth)acrylate de polyéthylène-glycol, styrène, dérivés halogénés du styrène, vinyl-toluène, divinyl-benzène, α-méthyl-styrène, et dimère d'α-méthyl-styrène, ainsi que les mélanges de ces composés.

7. Procédé conforme à la revendication 1, dans lequel on dilue ledit liant résineux de type acrylate de résine époxy halogénée en ajoutant d'environ 5 à environ 40 parties en poids du monomère réactif à d'environ 60 à environ 95 parties en poids du liant résineux de type acrylate de résine époxy halogénée.

8. Procédé conforme à la revendication 3, qui comporte en outre, avant l'addition goutte à goutte, le fait de faire fondre la résine époxy halogénée, et le fait d'ajouter, à la résine époxy halogénée fondue, d'environ 0,001 à environ 0,04 partie en poids d'un agent inhibiteur de polymérisation et à peu près de 0,005 à 0,02 partie en poids d'un agent modificateur de couleur, et dans lequel on fait ensuite démarrer ladite addition goutte à goutte en 1 minute.

9. Procédé conforme à la revendication 3, qui comporte en outre, après l'addition goutte à goutte, le fait d'élever la température de réaction jusqu'à une valeur d'environ 105 °C à environ 125 °C, et le fait de réaliser ensuite la réaction en mode isotherme.

10. Procédé conforme à la revendication 1, qui comporte en outre, après la dilution du liant résineux de type acrylate de résine époxy halogénée, le fait de faire refroidir le mélange réactionnel jusqu'à une température d'environ 60 °C ou moins.

11. Procédé conforme à la revendication 10, qui comporte en outre, avant l'addition du monomère réactif, le fait d'ajouter, au liant résineux de type acrylate de résine époxy halogénée, un agent inhibiteur de polymérisation, en une quantité d'environ 0,001 à environ 0,04 partie en poids.

12. Procédé conforme à la revendication 10, dans lequel ledit liant résineux de type acrylate de résine époxy halogénée comprend en outre un sel de type savon métallique en tant qu'agent de régulation du durcissement.

13. Procédé conforme à la revendication 8 ou 11, pour lequel ledit agent inhibiteur de polymérisation est choisi dans l'ensemble constitué par l'hydroquinone, la méthyl-hydroquinone, l'éther monométhylique d'hydroquinone, la para-benzoquinone, la diméthyl-parabenzoquinone et le para-tertiobutyl-catéchol, ainsi que leurs mélanges.

14. Procédé conforme à la revendication 1, dans lequel ledit liant comprend en outre une résine de type uréthane-acrylate halogénée.

15. Procédé conforme à la revendication 1, dans lequel ledit liant résineux de type acrylate de résine époxy halogénée présente un indice d'acide valant d'environ 1 à environ 15.

16. Procédé conforme à la revendication 1, dans lequel ladite composition de résine comprend en outre un adjuvant choisi dans l'ensemble constitué par un agent de démoussage, un agent de couplage, un pigment, un colorant, un agent absorbant le rayonnement ultraviolet, un agent photo-diffusant, un inhibiteur de polymérisation, un agent de régulation du durcissement, un agent antistatique, un agent ignifugeant, et un agent thermo-stabilisant, ainsi que les mélanges de tels adjuvants.
